(19) Europäisches Patentamt
European Patent Office
Office européen des brevets

(11) **EP 2 420 803 A1**

(12) **EUROPÄISCHE PATENTANMELDUNG**

(43) Veröffentlichungstag:
**22.02.2012 Patentblatt 2012/08**

(51) Int Cl.:
***G01D 5/20*** *(2006.01)*

(21) Anmeldenummer: **10008468.0**

(22) Anmeldetag: **13.08.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(71) Anmelder: **BALLUFF GmbH**
**73765 Neuhausen (DE)**

(72) Erfinder:
• **Fericean, Sorin**
**71229 Leonberg (DE)**

• **Hiller-Brod, Andrea**
**73235 Weilheim (DE)**
• **Droxler, Reinhard**
**72800 Eningen (DE)**
• **Fritton, Markus**
**73765 Neuhausen (DE)**
• **Kräter, Daniel**
**75056 Sulzfeld (DE)**

(74) Vertreter: **Jakelski, Joachim**
**Otte & Jakelski, Patentanwaltskanzlei**
**Mollenbachstrasse 37**
**71229 Leonberg (DE)**

(54) **Vorrichtung zum Erfassen des Verdrehwinkels einer Welle und /oder eines an der Welle auftretenden Drehmoments und Verfahren zum Betreiben der Vorrichtung**

(57) Es werden eine Vorrichtung zur Erfassung eines Verdrehwinkels (dw) und/oder eines an der Welle (10) auftretenden Drehmoments (Md) einer Welle (10) und Verfahren zum Betreiben der Vorrichtung vorgeschlagen. Die Vorgehensweisen zeichnen sich dadurch aus, dass der Welle (10) wenigstens ein erster Geber (G1) zugeordnet ist, welcher wenigstens einen Spulenparameter beeinflusst, dass zur Abtastung des ersten Gebers (G1) wenigstens ein erster induktiver Sensor (S1, S1sin, S1cos, S1asin, S1acos, S1bsin, S1bcos) vorgesehen ist, dass der wenigstens eine erste Geber (G1) zumindest einem Teil des Umfangs der Welle (10) zugeordnet ist, dass der wenigstens eine erste Geber (G1) zumindest eine Spur (18, 18a, 18b) mit wenigstens einer Periode (32, 32a, 32_1a, 32_1 b) pro Umdrehung der Welle (10) aufweist und dass der wenigstens eine erste induktive Sensor (S1, S1sin, S1cos, S1asin, S1acos, S1bsin, S1bcos) ein Sensorsignal (SW1, SW1sin, SW1cos, SW1asin, SW1acos, SW1bsin, SW1bcos) bereitstellt, das zumindest ein Maß für den Drehwinkel (w1) der Welle (10) innerhalb der Periode (32, 32a, 32_1 a, 32_1 b) widerspiegelt, dass in einem vorgegebenen Abstand (L) zum ersten Geber (G1) ein ebenfalls zumindest einem Teil des Umfangs der Welle (10) zugeordneter zweiter Geber (G2) vorgesehen ist, welcher ebenfalls wenigstens einen Spulenparameter beeinflusst, dass zur Abtastung des wenigstens einen zweiten Gebers (G2) wenigstens ein induktiver Sensor (S2, S2sin, S2cos, S2asin, S2acos, S2bsin, S2bcos) vorgesehen ist, dass der wenigstens eine zweite Geber (G2) ebenfalls zumindest eine Spur (19, 19a, 19b) mit wenigstens einer Periode (32b, 32_2a, 32_2b) pro Umdrehung der Welle (10) aufweist, dass der zweite induktive Sensor (S2, S2sin, S2cos, S2asin, S2acos, S2bsin, S2bcos) ebenfalls ein Sensorsignal (SW2, SW2sin, SW2cos, SW2asin, SW2acos, SW2bsin, SW2bcos) bereitstellt, das zumindest ein Maß für den Drehwinkel (w2) der Welle (10) innerhalb der Periode (32_2a, 32_2b) widerspiegelt, und dass eine Differenzermittlung (22) vorgesehen ist, welche den Verdrehwinkel (dw) der Welle (10) als Winkeldifferenz der von den induktiven Sensoren (S1, S1sin, S1cos, S1asin, S1acos, S1bsin, S1bcos, S2sin, S2cos, S2asin, S2acos, S2bsin, S2bcos) erfassten zwei Drehwinkeln (w1, w2) ermittelt und bereitstellt. Die erfindungsgemäßen Vorgehensweisen ermöglichen neben der Ermittlung des Verdrehwinkels (w1, w2) der Welle (10) insbesondere die Ermittlung des an der Welle (10) auftretenden Drehmoments (Md) anhand der Ermittlung einer Winkeldifferenz (w2-w1), die dem Verdrehwinkel (dw) entspricht.

EP 2 420 803 A1

**(Forts. nächste Seite)**

Fig.19

**Beschreibung**

Die Erfindung geht aus von einer Vorrichtung zum Erfassen des Verdrehwinkels einer Welle und/oder eines an der Welle auftretenden Drehmoments sowie von Verfahren zum Betreiben der Vorrichtung.

Gegenstand der vorliegenden Erfindung ist auch Computer-Programm zum Betreiben der Vorrichtung.

**Stand der Technik**

In der Patentschrift DE 198 18 799 C2 ist eine Vorrichtung zum Erfassen des Drehwinkels einer Welle beschrieben. Die Vorrichtung enthält einen magnetischen Maßstab sowie eine dem Maßstab zugeordnete Sensoreinheit. Der magnetische Maßstab weist zwei auf der Drehachse koaxial angeordnete magnetisch codierte Ringe auf. Die Anzahl der Magnetpole auf dem halben Umfang des einen Rings ist teilerfremd zu der Anzahl der Magnetpole auf dem halben Umfang des anderen Rings. Ein Ring weist weiterhin eine ungerade Anzahl von Polen auf. Die Sensoranordnung enthält zwei magnetoresistive Sensoren, welche das Magnetfeld der beiden Ringe erfassen und einen weiteren, als Hallsensor ausgebildeten Sensor, der das Magnetfeld des Rings mit der ungeraden Anzahl von Polen erfasst.

In der Offenlegungsschrift DE 199 32 965 A1 ist eine Positions-Messvorrichtung beschrieben, mit der das an einer Welle auftretende Drehmoment ermittelt wird. Der optische Sensor umfasst eine Skaleneinheit mit einer ersten Doppelskale aus einer ersten und einer zweiten in Umfangsrichtung der Welle angeordneten Strichskale. Die Überlagerung beider Strichskalen erzeugt ein vom Drehmoment abhängiges optisch detektierbares Moire-Muster. Ein optischer Sensor erfasst einen Teilbereich des Moire-Musters, das in einer Auswerteeinheit in ein Abbild einer Periode des Moire-Musters umgewandelt wird, dem bei stillstehender Welle der Nullpunkt des Drehmoments zugeordnet wird.

In der Patentschrift DE 602 01 226 T2 ist eine kapazitive Messvorrichtung beschrieben, mit der das an einer zweigeteilten, mit einem Torsionsstab verbundenen Welle auftretende Drehmoment gemessen wird. Vorgesehen ist eine dielektrische Scheibe, die eine Mehrzahl von Speichen aufweist und für eine Drehung mit der ersten Hälfte der Welle montiert ist. Vorhanden ist weiterhin ein aus einer ersten und einer zweiten, mit Öffnungen versehenen leitenden Scheibe gebildetes Paar, das die dielektrische Scheibe käfigartig einschließt und das für eine Drehung mit der Hälfte der Welle montiert ist, wobei der Käfig Abschnitte der Speichen der dielektrischen Scheibe im Verhältnis zu einem ausgeübten Drehmoment der Welle abdeckt. Ferner ist ein Paar konzentrischer Kondensator-Plattenringe vorgesehen, welche die erste Wellenhälfte umschließend in einer ersten mit Öffnungen versehenen leitenden Scheibe angeordnet sind. Weiterhin ist eine gegenüberliegende Kondensatorplatte vorgesehen, welche die zweite Wellenhälfte umschließt und neben der zweiten mit Öffnungen versehenen leitenden Scheibe angeordnet ist. Ferner sind elektrische Brückenmittel zum Vergleichen der zwischen dem Paar konzentrischer Ringe und der gegenüberliegenden Kondensatorplatte gebildeten Kapazitäten vorgesehen, um letztendlich das an der Welle auftretenden Drehmoment zu bestimmen.

In der Patentschrift DE 697 32 355 T2 ist ein Verfahren zum Einbau eines Drehmomentsensors in Motoren oder Getrieben beschrieben, der im Wesentlichen konzentrisch in Verbindung mit einer rotierenden Welle eingebaut ist. Der Drehmomentsensor besteht aus mindestens einer stationären Spule und er weist mindestens eine Zone auf, die mit parallelen Leitungsbahnen aus leitfähigem Material ausgestattet ist. Die rotierende Welle ist als Kurbelwelle ausgebildet, die eine Ausnehmung aufweist, wobei die Zone auf einer äußeren Ummantelungsfläche einer Messfläche angeordnet ist, die in der Ausnehmung befestigt und von der stationären Spule eingeschlossen ist. Die bekannte Anordnung zeichnet sich dadurch aus, dass die Messwelle und die Ausnehmung jeweils mit einer Öffnung versehen sind und gemeinsam einen durch diese Öffnungen verlaufenden Bolzen beziehungsweise eine Schraube aufnehmen, um die Ausnehmung und die Messwelle zu befestigen beziehungsweise zu verriegeln.

In der Offenlegungsschrift DE 10 2007 023 537 A1 ist eine Vorrichtung zum Messen von Dehnungen beschrieben, die insbesondere auch zum Messen von Drehmomenten geeignet ist. Anschlüsse, über welche die Drehmomente einbeziehungsweise ausgeleitet werden, sind über Dehnungs-Messstrukturen miteinander verbunden, die Messwertgeber aufweisen. Die Vorrichtung ist als Ringflansch ausgebildet, der in Segmente unterteilt ist, die durch die Dehnungs-Messstrukturen miteinander verbunden sind.

Aus der Patentschrift EP 1 315 954 B1 ist ein Verfahren zur Ermittlung der Winkeldifferenz an einer geteilten Welle mit Phasenspuren und einem zwischengeschalteten Torsionsstab bekannt geworden, wobei mittels zugeordneter optischer Sensoren und einer Auswerteeinheit in Bezug auf eine Umdrehung der Welle zunächst jeweils mehrdeutige Phasensignale gewonnen werden. Das bekannte Verfahren zeichnet sich dadurch aus, dass wenigstens zwei Phasensignale zu einem Signal gewichtet aufsummiert werden, dass von dem Signal ein nicht ganzzahliger Anteil gebildet wird, wobei der Anteil proportional der Winkeldifferenz ist, und dass aus der Winkeldifferenz durch Multiplikation mit der Federrate des zwischengeschalteten Torsionsstabs das an der Welle anliegende Drehmoment bestimmt wird.

Induktive Sensoren, die in der vorliegenden Patentanmeldung eingesetzt werden, sind im Internet unter dem zur Anmelderin führenden Link: http://www.balluff.com beschrieben. Die induktiven Sensoren stellen ein Analogsignal bereit, das innerhalb des spezifizierten Arbeitsbereichs proportional zum Abstand in Bezug auf einen Geber ist.

Der Erfindung liegt die Aufgabe zugrunde, eine Vorrichtung und verschiedene Verfahren zum Betreiben der Vorrichtung anzugeben, die eine zuverlässige Ermittlung des Verdrehwinkels einer Welle und/oder eines an der Welle auftretenden Drehmoments, insbesondere bei rauen Umgebungsbedingungen, wie sie beispielsweise bei Getrieben auftreten, ermöglichen.

Die Aufgabe wird durch die in den unabhängigen Ansprüchen angegebenen Merkmale jeweils gelöst.

**Offenbarung der Erfindung**

Die erfindungsgemäße Vorrichtung zum Erfassen des Verdrehwinkels einer Welle zeichnet sich dadurch aus, dass der Welle wenigstens ein erster Geber zugeordnet ist, welcher wenigstens einen Spulenparameter beeinflusst, dass zur Abtastung des ersten Gebers wenigstens ein erster induktiver Sensor vorgesehen ist, dass der wenigstens eine erste Geber zumindest einem Teil des Umfangs der Welle zugeordnet ist, dass der wenigstens eine erste Geber zumindest eine Spur mit wenigstens einer Periode pro Umdrehung der Welle aufweist und dass der wenigstens eine erste induktive Sensor ein Sensorsignal bereitstellt, das zumindest ein Maß für den Drehwinkel der Welle innerhalb der Periode widerspiegelt, dass in einem vorgegebenen Abstand zum ersten Geber ein ebenfalls zumindest einem Teil des Umfangs der Welle zugeordneter zweiter Geber vorgesehen ist, welcher ebenfalls wenigstens einen Spulenparameter beeinflusst, dass zur Abtastung des wenigstens einen zweiten Gebers wenigstens ein induktiver Sensor vorgesehen ist, dass der wenigstens eine zweite Geber ebenfalls zumindest eine Spur mit wenigstens einer Periode pro Umdrehung der Welle aufweist, dass der zweite induktive Sensor ebenfalls ein Sensorsignal bereitstellt, das zumindest ein Maß für den Drehwinkel der Welle innerhalb der Periode widerspiegelt, und dass eine Differenzermittlung vorgesehen ist, welche den Verdrehwinkel der Welle als Winkeldifferenz der von den induktiven Sensoren erfassten zwei Drehwinkeln ermittelt und bereitstellt.

Die erfindungsgemäße Vorrichtung zum Erfassen des Verdrehwinkels einer Welle ermöglicht eine kontinuierliche Messung des Verdrehwinkels. Die erfindungsgemäße Vorrichtung weist eine hohe Zuverlässigkeit auch bei besonders widrigen Umgebungsbedingungen auf. Verschmutzungen sowohl des Gebers als auch des Sensors beeinflussen die Genauigkeit nicht. Die erfindungsgemäße Vorrichtung weist eine kompakte Bauform auf und kann ohne einen wesentlichen Eingriff in die Struktur der Welle realisiert werden.

Vorgesehen ist eine Differenzermittlung, welche die Differenz der von den induktiven Sensoren erfassten zwei Drehwinkel ermittelt und bereitstellt. Die Winkeldifferenz entspricht dem Verdrehwinkel der Welle, der aufgrund eines an der Welle wirkenden Drehmoments auftritt. Daher ermöglicht die erfindungsgemäße Vorrichtung die Ermittlung eines Maßes für das Drehmoment.

Aufgrund der vergleichsweise geringen Kosten eignet sich die erfindungsgemäße Vorrichtung zum Erfassen des Verdrehwinkels einer Welle und/oder eines an der Welle auftretenden Drehmoments besonders für die Serienproduktion.

Vorteilhafte Weiterbildungen und Ausgestaltungen der erfindungsgemäßen Vorgehensweise sind Gegenstand der abhängigen Ansprüche.

Eine vorteilhafte Ausgestaltung sieht vor, dass die wenigstens eine Spur des ersten und/oder zweiten Gebers nur eine einzige Periode enthält, dass sich die Spur mit einer vorgegebenen Steigung in Längsrichtung der Welle in Spiralenform, beispielsweise in Helixform, zumindest teilweise um die Welle windet. Damit ergibt sich der Vorteil, dass stets ein eindeutiger Zusammenhang zwischen dem Drehwinkel der Welle und dem Sensorsignal gegeben ist.

Eine Weiterbildung dieser Ausgestaltung sieht vor, dass die Steigung der Spirale beispielsweise in Helixform, in Längsrichtung der Welle wenigstens näherungsweise konstant ist. Dadurch wird wenigstens näherungsweise ein linearer Zusammenhang zwischen dem Drehwinkel der Welle und dem Sensorsignal erzielt.

Eine andere Weiterbildung dieser Ausgestaltung sieht vor, dass die Steigung derart festgelegt ist, dass sich die wenigstens eine Spirale zumindest einmal vollständig um die Welle erstreckt. Damit kann der Verdrehwinkel eindeutig im Bereich von 0° bis 360° erfasst werden.

Gemäß einer anderen Ausgestaltung ist vorgesehen, dass die wenigstens eine Spur des ersten und/oder zweiten Gebers nur eine Periode enthält, dass sich die Spur mit einer vorgegebenen Steigung in Längsrichtung der Welle in Ellipsenform zumindest teilweise um die Welle windet. Vorzugsweise umschließt die wenigstens eine Spur die Welle vollständig, sodass eine geschlossene Ellipsenform auftritt. Damit kann der Verdrehwinkel eindeutig entweder im Bereich von 0° bis 180° oder im Bereich von 180° bis 360° erfasst werden.

Eine Ausgestaltung sieht die Realisierung der Spur als Nut in der Welle vor. Vorzugsweise wird die Spur jedoch als Steg auf der Welle realisiert. Dadurch kann der Steg als separates Teil, beispielsweise als Band, zum nachträglichen Aufbringen auf die Welle realisiert sein. Mit dieser Ausgestaltung wird neben dem Vorteil der möglichen Nachrüstung der weitere wesentliche Vorteil erzielt, dass die Struktur der Welle unangetastet bleibt.

Eine andere Ausgestaltung sieht vor, dass zumindest einer Spur zwei Spursensoren zugeordnet sind. Vorzugsweise sind die beiden Spursensoren eines Gebers bezogen auf den Umfang der Welle um einen Winkel von wenigstens näherungsweise 90° versetzt angeordnet. Damit kann eine Plausibilisierung der Sensorsignale oder beispielsweise eine Mittelwertbildung erfolgen.

Eine Weiterbildung sieht vor, dass die Spur des ersten Gebers bezogen auf die Längsrichtung der Welle spiegelverkehrt gegenüber der Spur des zweiten Gebers gewunden ist. Damit können Gleichtaktstörungen unterdrückt beziehungsweise kompensiert werden.

Eine andere Ausgestaltung sieht vor, dass sich die Spur des ersten und/oder zweiten Gebers ohne Steigung nur in Umfangsrichtung der Welle erstreckt. Der Geber kann die Welle vollständig umschlingen oder nur einem Teil des Umfangs der Welle zugeordnet sein.

Weiterbildungen dieser Ausgestaltung sehen vor, dass die Periode der wenigstens einen Spur des ersten und/ oder zweiten Gebers als Steg beziehungsweise Nut mit modulierter Breite und/oder Höhe realisiert ist. Weiterhin kann vorgesehen sein, dass die Periode der wenigstens einen Spur des ersten und/oder zweiten Gebers als Steg mit sinusförmig modulierter Breite oder als Steg mit zumindest abschnittsweise sinusförmig modulierter Breite oder als Nocken oder als Ausnehmungen realisiert ist.

Eine Ausgestaltung dieser Weiterbildung sieht vor, dass die wenigstens eine Spur des wenigstens einen Gebers eine Vielzahl von sich wiederholenden Perioden enthält. Mit dieser Ausgestaltung wird die Auflösung des Sensorsignals bezogen auf den Umfang der Welle wesentlich erhöht, wobei eine eindeutige Erfassung des Drehwinkels der Welle innerhalb einer der sich wiederholenden Perioden gegeben ist.

Eine andere Weiterbildung dieser Ausgestaltung sieht vor, dass einer Spur ein erster und ein zweiter induktiver Spursensor zugeordnet sind, die in Bezug auf die Periode der Spur derart positioniert sind, dass der eine induktive Spursensor gegenüber dem anderen induktiven Spursensor ein wenigstens näherungsweise um 90° phasenverschobenes Sensorsignal bereitstellt.

Mit einem erfindungsgemäßen Verfahren zum Betreiben dieser Ausgestaltung der Vorrichtung kann mittels einer Division der beiden Signale ein Gleichtakt-Störeinfluss auf die Signalhöhe der beiden einzelnen Sensoren eliminiert werden. Ein Maß für den Drehwinkel der Welle innerhalb einer Periode ergibt sich dann aus der Arcustangens-Funktion.

Eine besonders vorteilhafte Weiterbildung dieser Ausgestaltung, bei welcher die Spur eine mehrmals sich wiederholende Periode aufweist, sieht vor, dass der wenigstens eine Geber eine weitere, unmittelbar benachbarte Spur enthält. Die erste Spur weist eine vorgegebene Anzahl größer eins von sich wiederholenden Perioden auf. Die zweite Spur weist zwar ebenfalls eine vorgegebene Anzahl von sich wiederholenden Perioden auf, wobei deren Anzahl jedoch um eins oder Vielfache davon von der Anzahl der Perioden der ersten Spur abweicht. Mit dieser Ausgestaltung wird die Vieldeutigkeit aufgrund der mehreren Perioden bezogen auf den Umfang der Welle eliminiert. Ein eindeutiges Ergebnis bei der Ermittlung des Drehwinkels der Welle wird mittels einer Bewertung der Winkeldifferenz zwischen den beiden Perioden erzielt, die charakteristisch für jedes Periodenpaar ist. Die maßgebende Periode einer Spur, die zur Winkelerfassung herangezogen wird, kann somit identifiziert und Eindeutigkeit hergestellt werden.

Auch bei dieser zuvor beschriebenen Ausgestaltung werden vorzugsweise jeder der unmittelbar benachbart angeordneten Spuren ein erster und ein zweiter induktiver Spursensor zugeordnet, die jeweils in Bezug auf die Periode oder die Perioden ihrer Spur derart positioniert sind, dass der eine induktive Spursensor gegenüber dem anderen induktiven Spursensor ein um wenigstens näherungsweise 90° phasenverschobenes Spur-Sensorsignal bereitstellt.

Auch hier kann vorzugsweise mit einem erfindungsgemäßen Verfahren zum Betreiben dieser Ausgestaltung der Vorrichtung mittels einer Division der beiden Signale ein Gleichtakt-Störeinfluss auf die Signalhöhe der beiden einzelnen Sensoren eliminiert werden. Ein Maß für den Drehwinkel der Welle innerhalb einer Periode ergibt sich dann wieder aus der Arcustangens-Funktion.

Das wesentliche erfindungsgemäße Verfahren zum Betreiben der Vorrichtung ermöglicht die Ermittlung einer Verdrehwinkeldifferenz, die einem Verdrehwinkel der Welle bezüglich dem Abstand der beiden Geber entspricht. Der gegebenenfalls auftretende Verdrehwinkel entspricht einem an der Welle wirkenden Drehmoment. Durch den Einsatz der erfindungsgemäßen Vorrichtung ist eine äußerst zuverlässige Erfassung des Drehmoments einer Welle auch bei besonders widrigen Umgebungsbedingungen möglich.

Eine bevorzugte Verwendung der erfindungsgemäßen Vorrichtung zum Erfassen eines Verdrehwinkels oder eines daraus ermittelbaren Maßes für das an der Welle wirkende Drehmoment ist aus diesem Grund beispielsweise in großen Getrieben gegeben, die gegebenenfalls in besonderem Maße der Witterung und/oder enormen mechanischen Belastungen ausgesetzt sein können. Ein Vorteil gegenüber magnetischen Gebern liegt darin, dass beispielsweise Metallspäne nicht am Geber anhaften und dass der Geber dauerhaft ist, weil eine Entmagnetisierung entfällt.

Weiterhin ist ein erfindungsgemäßes Computerprogramm zum Betreiben der Vorrichtung zur Erfassung des Verdrehwinkels einer Welle und/oder eines an der Welle auftretenden Drehmoments vorgesehen. Das Computerprogramm führt hierbei alle erforderlichen Schritte zur Ermittlung des Verdrehwinkels einer Welle und/oder eines an der Welle auftretenden Drehmoments aus, wenn das Computerprogramm in einem Computer einer signalverarbeitenden Anordnung abläuft.

Ausführungsbeispiele der Erfindung sind in der Zeichnung dargestellt und in der nachfolgenden Beschreibung näher erläutert.

**Kurzbeschreibung der Figuren**

Figur 1 zeigt eine Welle, der ein Geber zugeordnet ist, welcher von einem Sensor abgetastet wird,

Figur 2 zeigt einen funktionalen Zusammenhang zwischen einem Drehwinkel der Welle und einem Ausgangssignal des Sensors,

Figur 3 zeigt ebenfalls eine Welle, der ein Geber zugeordnet ist, welcher ebenfalls von einem Sensor abgetastet wird,

Figur 4 zeigt einen funktionalen Zusammenhang zwischen einem Drehwinkel der Welle und einem Ausgangssignal des in Figur 3 gezeigten Sensors,

Figur 5 zeigt eine Welle, der ein Geber zugeordnet ist, welcher von zwei Sensoren abgetastet wird,

Figur 6 zeigt funktionale Zusammenhänge zwischen einem Drehwinkel der Welle und Ausgangssignalen der in Figur 5 gezeigten Sensoren,

Figur 7 zeigt eine Welle, an welcher ein auftretendes Drehmoment zu einer Verdrehung der Welle führt,

Figur 8 zeigt eine Welle, der zwei in einem vorgegebenen Abstand bezogen auf die Wellen-Längsrichtung versetzte Geber zugeordnet sind, welche jeweils von einem Sensor abgetastet werden,

Figur 9 zeigt eine Welle, der ebenfalls zwei in einem vorgegebenen Abstand bezogen auf die Wellen-Längsrichtung versetzte Geber zugeordnet sind, welche jeweils von einem Sensor abgetastet werden, wobei die Spuren der Geber alternativ ausgestaltet sind,

Figur 10 zeigt eine Welle, der ebenfalls zwei in einem vorgegebenen Abstand bezogen auf die Wellen-Längsrichtung versetzte Geber zugeordnet sind, welche jeweils von zwei Sensoren abgetastet werden,

Figur 11 zeigt eine Welle, der zwei in einem vorgegebenen Abstand bezogen auf die Wellen-Längsrichtung versetzte Geber zugeordnet sind, welche jeweils von zwei Sensoren abgetastet werden, wobei die Spuren der Geber alternativ ausgestaltet sind,

Figur 12 zeigt ein Blockschaltbild einer signalverarbeitenden Anordnung,

Figur 13 zeigt eine Welle, der ein Geber zugeordnet ist, welcher von zwei Spur-Sensoren abgetastet wird,

Figur 14 zeigt ein Ausführungsbeispiel einer Spur eines Gebers,

Figur 15 zeigt ein weiteres Ausführungsbeispiel einer Spur eines Gebers,

Figur 16 zeigt ein anderes Ausführungsbeispiel einer Spur eines Gebers,

Figur 17 zeigt ein alternatives Ausführungsbeispiel einer Spur eines Gebers,

Figur 18 zeigt ein Ausführungsbeispiel eines Gebers mit zwei Spuren, die jeweils von zwei Spur-Sensoren abgetastet werden und

Figur 19 zeigt eine Welle, der wieder zwei in einem vorgegebenen Abstand bezogen auf die Wellen-Längsrichtung versetzte Geber mit jeweils zwei Spuren zugeordnet sind, die jeweils von zwei Spur-Sensoren abgetastet werden.

**Detaillierte Beschreibung der Ausführungsbeispiele**

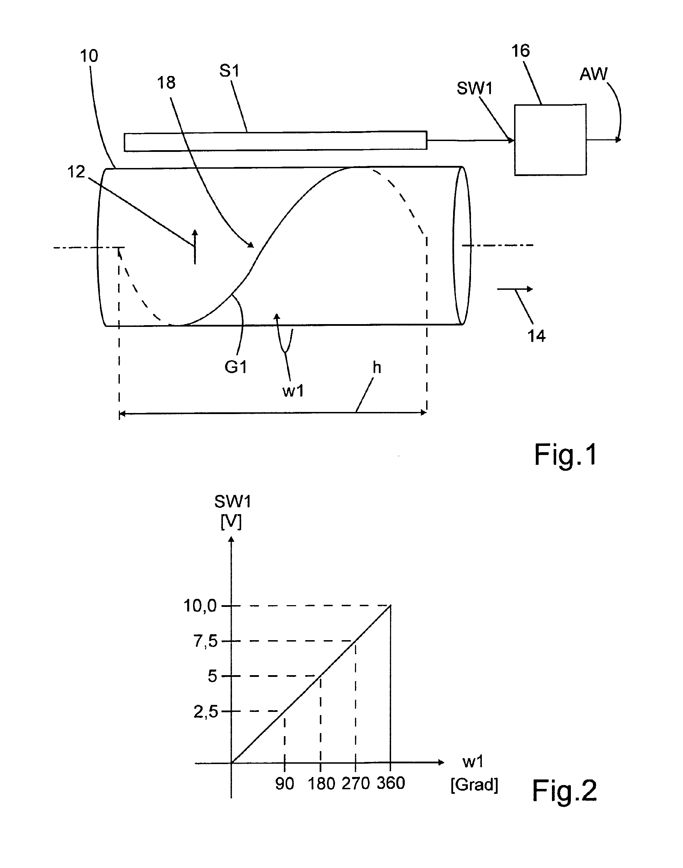

Figur 1 zeigt eine Welle 10 oder zumindest einen Abschnitt einer Welle 10, der ein Geber G1 zugeordnet ist, welcher von einem Weg-Sensor S1 abgetastet wird, der im Folgenden als Weg-Sensor S1 bezeichnet wird. Der Geber G1 weist eine Spur 18 auf, die sich in Umfangsrichtung 12 der Welle 10 um die Welle 10 vorzugsweise in Helixform beziehungsweise Spiralenform windet. Im gezeigten

Ausführungsbeispiel wird von einer vollständigen Umschlingung durch den Geber G1 ausgegangen. Die Umschlingung kann sich auch über nur einen Teil des Umfangs der Welle 10 erstrecken. Die Spur 18 weist damit wenigstens eine Periode pro Umdrehung der Welle 10 auf, wobei im gezeigten Ausführungsbeispiel genau eine Periode gezeigt ist. Im gezeigten Ausführungsbeispiel ist daher keine Wiederholung der Periode vorgesehen. Der Geber G1 erstreckt sich über eine bestimmte Steigung h in Längsrichtung 14 der Welle 10.

Der Geber G1 ist derart realisiert, dass er wenigstens einen Spulenparameter beeinflusst. Das soll bedeuten, dass der Geber G1 einen elektrischen Parameter, beispielsweise die Güte eines Schwingkreises, beeinflusst, wenn er von einem induktiven Sensor abgetastet wird, der von der Anmelderin beispielsweise unter der eingangs angegebenen Fundstelle angeboten wird.

Der den Geber G1 abtastende Weg-Sensor S1 ist entsprechend ein solcher induktiver Sensor, dessen Sensorsignal SW1 den dem Weg-Sensor S1 am nächsten liegenden Teil der Spur 18 des Gebers G1 positionssensitiv widerspiegelt.

Aufgrund der Zuordnung der Spur des Gebers G1 zu einer Position innerhalb der Steigung h spiegelt das Sensorsignal SW1 daher ein Maß für den Drehwinkel w1 der Welle 10 wider. Der Drehwinkel w1 kann gleichermaßen als Position der Welle 10 in Bezug auf die Umfangsrichtung 12 der Welle 10 bezeichnet werden. Im Folgenden wird jedoch nur vom Drehwinkel w1 der Welle 10 gesprochen.

Die Spur des Gebers G1 kann als Nut in der Welle 10 realisiert werden. Vorzugsweise ist jedoch eine Realisierung als Steg vorgesehen. Dadurch wird kein Eingriff in die Struktur der Welle 10 erforderlich. Der Steg kann nachträglich auf die Welle 10 aufgebracht werden.

Das Sensorsignal SW1 wird einer signalverarbeitenden Anordnung 16 zur Verfügung gestellt, welche das normalerweise analog vorliegende Sensorsignal SW1 in ein Ausgangssignal AW umwandelt, welches zumindest ein Maß für den Drehwinkel w1 der Welle 10 ist. Der Drehwinkel w1 in Grad ist proportional dem Produkt aus dem Sensorsignal SW1 in Volt, das eine Funktion des Wegs beziehungsweise der Auslenkung ist, und dem Umschlingungswinkel des Gebers G1 (beispielsweise 360°) sowie umgekehrt proportional zum Produkt der Steigung h (Helix-Steigung) in Millimetern und der Steigung b des Sensorsignals SW1 in V/mm.

$$w1 = \frac{SW1}{h*b} * \frac{360°}{2\pi} \quad (1)$$

Der funktionale Zusammenhang zwischen dem Drehwinkel w1 der Welle 10 und dem Sensorsignal SW1 ist in Figur 2 wiedergegeben.

Die in Figur 1 beispielhaft gezeigte, in Spiralenform realisierte Spur 18 des Gebers G1 führt zu einem wenigstens näherungsweise linearen Zusammenhang zwischen dem Ausgangssignal AW und dem Drehwinkel w1. Daher ist in diesem Ausführungsbeispiel jedem Winkel w1 der Welle 10 eindeutig ein bestimmter Wert des Sensorsignals SW1 zugeordnet.

Im gezeigten Ausführungsbeispiel wird davon ausgegangen, dass die Spannung des Sensorsignals SW1 des Weg-Sensors S1 zwischen OV und 10V liegen soll, die eindeutig einer Position der Spur des Gebers G1 innerhalb der Steigung h und die damit eindeutig einem bestimmten Drehwinkel w1 der Welle 10 zugeordnet werden kann. Nach Erreichen des Drehwinkels 360° springt das Sensorsignal SW1 zurück auf null.

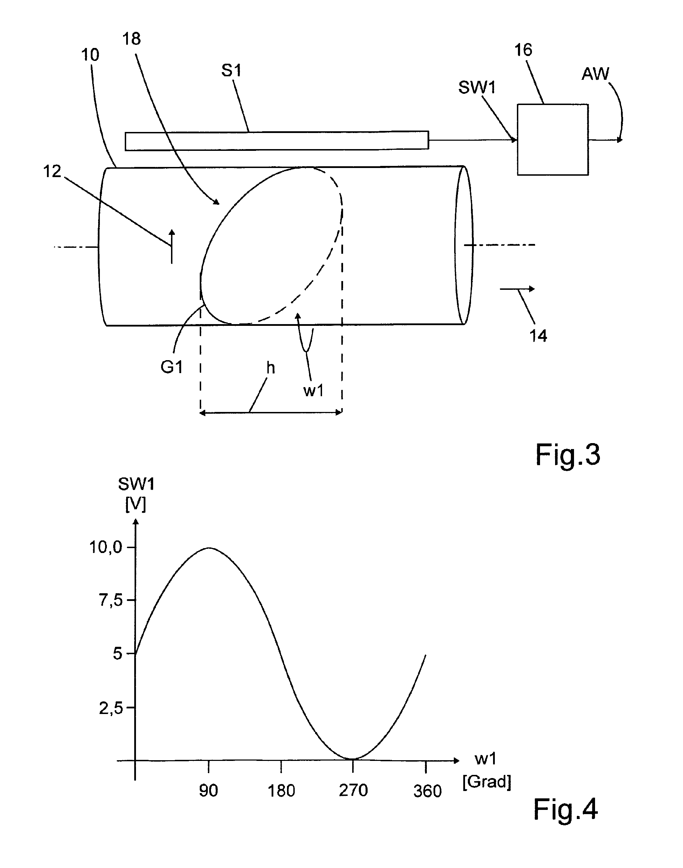

Anstelle der in Figur 1 gezeigten Helixform beziehungsweise Spiralenform der Spur 18 des Gebers G1, die zu einem linearen Zusammenhang zwischen dem Ausgangssignal AW des Gebers G1 und dem Drehwinkel w1 der Welle 10 über einen Teil oder maximal über den gesamten Umfang der Welle 10 führt, kann eine Ellipsenform der Spur 18 des Gebers G1 vorgesehen sein, die in Figur 3 dargestellt ist. Das Entstehen der Ellipsenform kann man sich so vorstellen, dass, ausgehend von einem Kreis um die Welle 10 in Umfangsrichtung 12, der Kreis an einer Stelle der Welle 10 fixiert und das um 180° gegenüberliegende Teil des Kreises in Längsrichtung 14 der Welle 10 um die vorgegebene Steigung h verschoben wird.

Die in Ellipsenform realisierte Spur 18 des Gebers G1 gemäß Figur 3 führt zu einem in Figur 4 gezeigten Zusammenhang zwischen dem Sensorsignal SW1 und dem Drehwinkel w1 der Welle 10, der sinus- beziehungsweise cosinusförmig verläuft, wobei eine eindeutige Zuordnung des Sensorsignals SW1 zum Drehwinkel w1 für eine halbe Umdrehung von 0° - 180° oder 180° - 360° gegeben ist. Es gilt:

$$w1 = \arcsin\left(\frac{SW1}{h*b} * \frac{360°}{2\pi}\right) \quad (2)$$

wobei die Größen w1, SW1 und b denen von Formal (1) entsprechen und die Steigung h hier die Ellipsenhöhe in Millimetern ist.

Bei dem in Figur 3 gezeigten Ausführungsbeispiel wird davon ausgegangen, dass die Umschlingung der Welle 10 vollständig ist, sodass entsprechend eine vollständige geschlossene Ellipse entsteht. Die in Figur 3 gezeigte Spur weist damit genau eine Periode pro Umdrehung der Welle 10 auf.

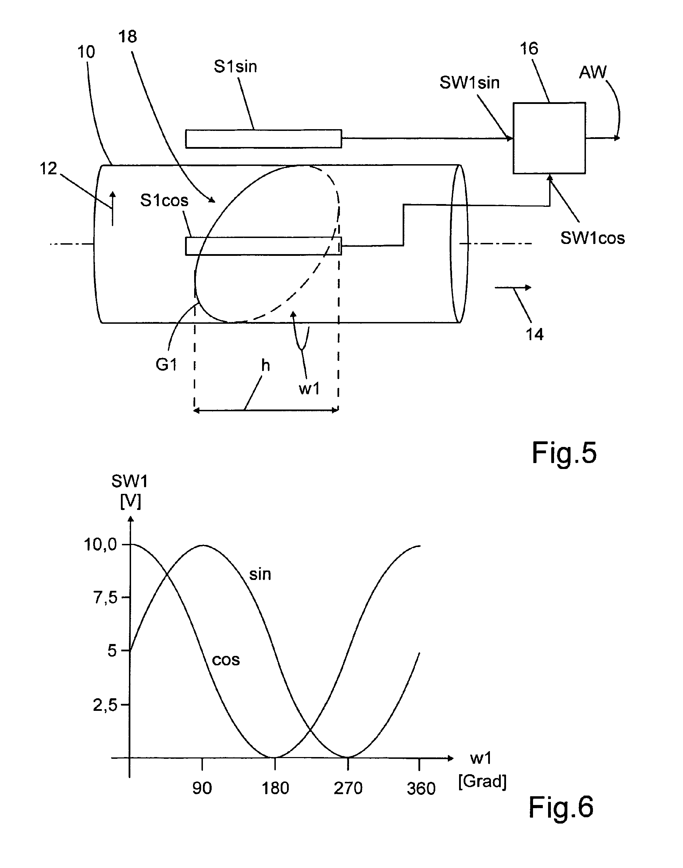

Zunächst können zur Erhöhung der Robustheit der Anordnung, insbesondere im Hinblick auf Störeinflüsse, welche auf das Sensorsignal SW1 einwirken, anstelle nur eines Weg-Sensors S1 ein erster und ein zweiter Sensor S1sin, S1cos, die im folgenden als erster und zweiter Weg-Sensor S1 sin, S1 cos bezeichnet werden, vorgesehen sein. Dieser Fall ist Figur 5 zugrunde gelegt. Der erste Weg-Sensor S1sin stellt dann ein Sensorsignal SW1sin und der zweite Weg-Sensor S1cos ein Sensorsignal SW1cos bereit. Der zweite Weg-Sensor S1cos tastet dieselbe Spur 18 wie der erste Weg-Sensor S1sin ab, ist jedoch derart in Bezug auf die Welle in Umfangsrichtung 12 angeordnet, dass sein Sensorsignal SW1cos um wenigstens näherungsweise 90° phasenversetzt zum Sensorsignal SW1sin des ersten Weg-Sensors S1sin ist. Die resultierenden Sensorsignale SW1sin, SW1cos sind in Figur 6 näher gezeigt.

In der signalverarbeitenden Anordnung 16, der in diesem Fall beide Sensorsignale

SW1sin, SW1cos zur Verfügung gestellt werden, wird die Arcustangens-Funktion der beiden Sensorsignale SW1sin, SW1cos gebildet, die unmittelbar den Drehwinkel w1 der Welle 10 eindeutig im Bereich von 0° - 360° liefert. Aufgrund der Division der beiden Sensorsignale SW1 sin, SW1 cos bei der Ermittlung der Arcustangens-Funktion ist das Ergebnis weitgehend unabhängig von Einflüssen, welche auf die Amplituden der Sensorsignale SW1sin, SW1cos gleichsinnig einwirken.

Aber auch bei dem Ausführungsbeispiel gemäß Figur 1 können zur Erhöhung der Robustheit der Anordnung, insbesondere im Hinblick auf Störeinflüsse, welche auf das Sensorsignal SW1 einwirken, anstelle eines Weg-Sensors S1 ein erster und ein zweiter Weg-Sensor vorgesehen sein. Das Sensorsignal steht dann redundant zur Verfügung, sodass eine Plausibilisierung und/oder beispielsweise eine Mittelwertbildung möglich sind.

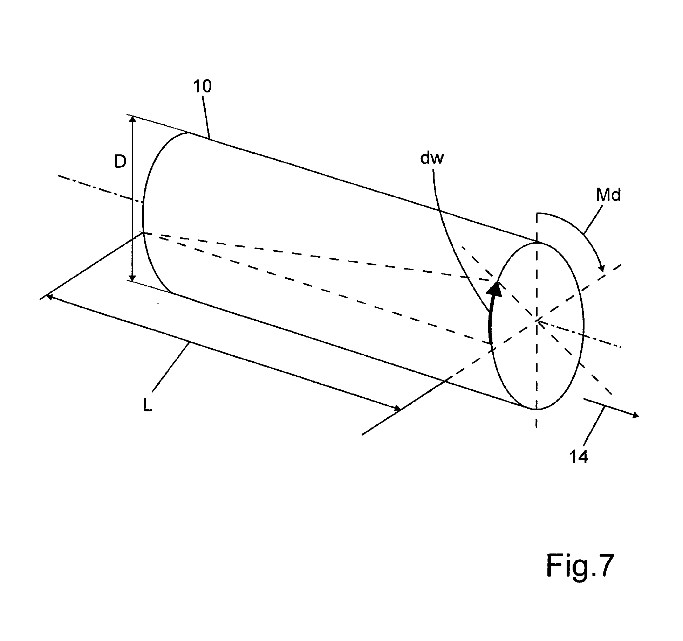

Figur 7 zeigt die Welle 10 oder zumindest einen Abschnitt der Welle 10, auf die ein Drehmoment Md einwirkt, das zu einer Torsion der Welle 10 führt. Bezogen auf einen vorgegebenen Abstand L in Längsrichtung 14 der Welle 10 hängt der Verdrehwinkel dw der Welle 10 vom Betrag des Drehmoments Md ab. Im Bereich elastischer Verformung ist der Verdrehwinkel dw in Grad proportional dem Produkt aus Drehmoment Md in Nmm und dem vorgegebenen Abstand L in mm sowie umgekehrt proportional zu dem Produkt aus Schubmodul G in $N/mm^2$, beispielsweise 80.000 $N/mm^2$ bei Stahl, und dem polaren Trägheitsmoment Ip. Das polare Trägheitsmoment Ip wiederum ist proportional zum Produkt aus $\pi/32$ und der vierten Potenz des Wellendurchmessers D in mm. Es gilt:

$$dw = \frac{Md}{G} * \frac{L}{Ip}) \quad (3) \text{ mit}$$

$$Ip = \frac{\pi}{32} * D^4 \quad (4)$$

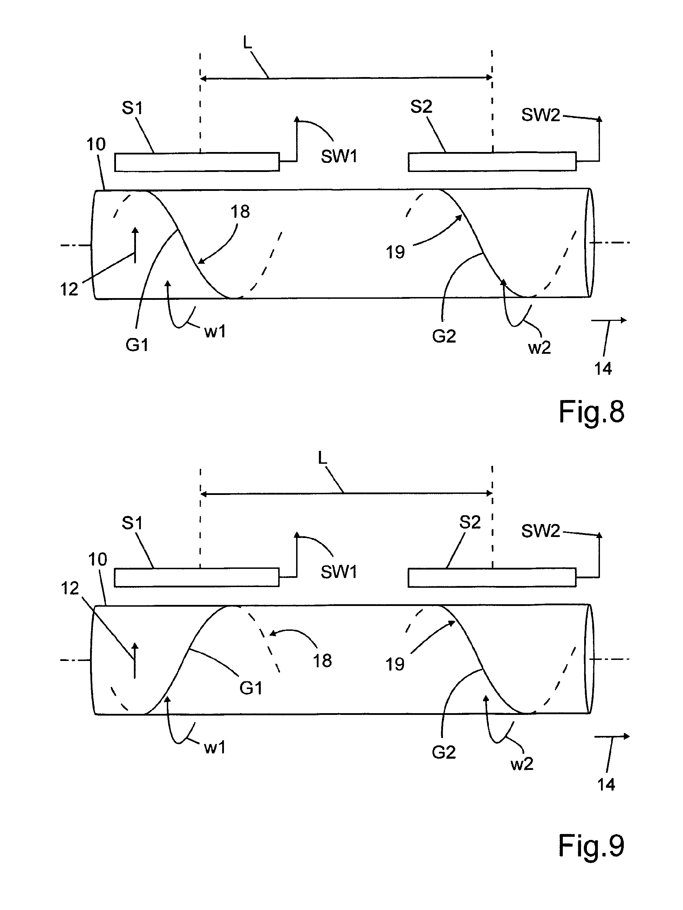

Figur 8 zeigt die Welle 10, der ein erster und zweiter Geber G1, G2 zugeordnet sind, die im vorgegebenen Abstand L bezogen auf die Wellen-Längsrichtung 14 versetzt sind. Der erste G1 wird wieder vom ersten Weg-Sensor S1 und der zweite Geber G2 von einem zweiten Weg-Sensor S2 abgetastet. Der erste Geber G1 soll wieder gemäß Figur 1 eine Spur aufweisen, die sich in Umfangsrichtung 12 der Welle 10 um die Welle 10 in Helixform beziehungsweise Spiralenform windet. Im gezeigten Ausführungsbeispiel wird wieder von einer vollständigen Umschlingung durch den Geber G1 ausgegangen. Die Umschlingung kann sich jedoch auch nur über einen Teil des Umfangs der Welle 10 erstrecken. Gleiches gilt für den zweiten Geber G2 und den zweiten Weg-Sensor S2.

Der den ersten Geber G1 abtastende erste Weg-Sensor S1 ist wieder ein induktiver Sensor, dessen Sensorsignal SW1 den dem ersten Weg-Sensor S1 am nächsten liegenden Abschnitt der Spur des ersten Gebers G1 positionssensitiv widerspiegelt. Das erste Sensorsignal SW1 ist daher wieder ein Maß für den Drehwinkel w1 der Welle 10 im Bereich des ersten Gebers G1.

Der den zweiten Geber G2 abtastende zweite Weg-Sensor S2 ist ebenfalls ein induktiver Sensor, dessen Sensorsignal SW2 den dem zweiten Weg-Sensor S2 am nächsten liegenden Abschnitt der Spur des zweiten Gebers G2 positionssensitiv widerspiegelt. Das zweite Sensorsignal SW2 ist daher ein Maß für den Drehwinkel w2 der Welle 10 im Bereich des zweiten Gebers G2.

Bei dem Ausführungsbeispiel gemäß Figur 8 können wieder zwei oder mehr erste Weg-Sensoren S1 vorgesehen sein, welche den ersten Geber G1 abtasten. Gleiches gilt für die Anordnung betreffend zweiter Geber G2 und zweiter Weg-Sensor S2.

Der wesentliche Vorteil der erfindungsgemäßen Anordnung gemäß Figur 8 liegt darin, dass aufgrund des vorgegebenen Abstands L zwischen den beiden Gebern G1, G2 ein gegebenenfalls auftretender Verdrehwinkel dw der Welle 10 erfasst werden kann, der zwischen dem Abstand L der beiden Geber G1, G2 auftritt. Wie bereits in Zusammenhang mit Figur 7 beschrieben, ist der Verdrehwinkel dw ein Maß für das an der Welle 10 auftretende Drehmoment Md, welches die Verdrehung verursacht.

Bei dem in Figur 8 gezeigten Ausführungsbeispiel laufen die Spuren 18, 19 der beiden Geber G1, G2 gleichsinnig um die Welle 10. Figur 9 zeigt ein Ausführungsbeispiel, bei dem die Spuren 18, 19 der beiden Geber G1, G2 spiegelverkehrt beziehungsweise gegensinnig um die Welle 10 verlaufen. Mit dieser Maßnahme werden Gleichtakteinflüsse auf die beiden Geber G1, G2 beziehungsweise die beiden Weg-Sensoren S1, S2 kompensiert.

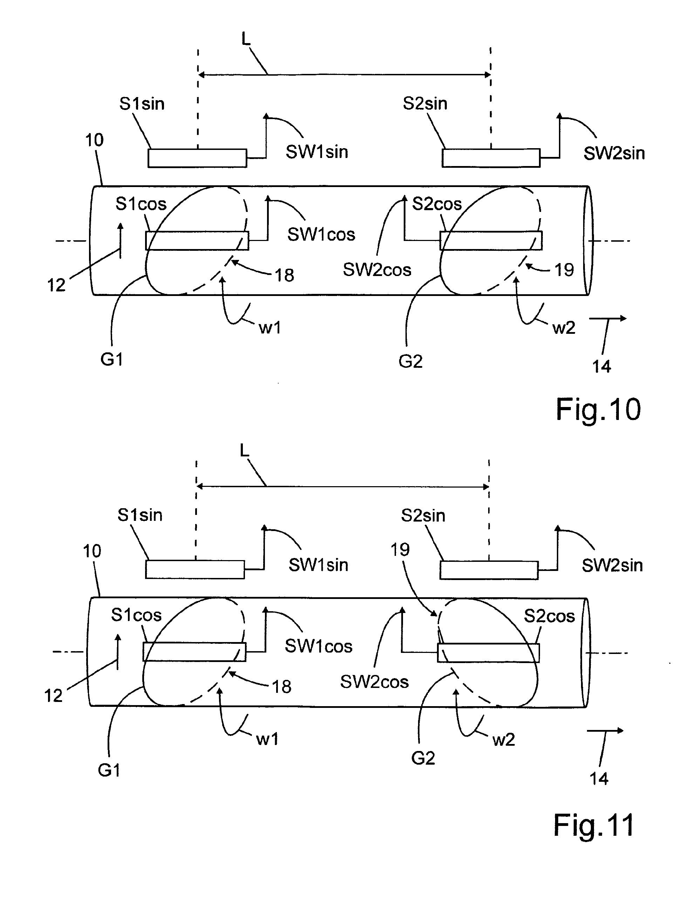

Figur 10 zeigt ein Ausführungsbeispiel zur Erfassung des Verdrehwinkels dw beziehungsweise des an der Welle 10 wirkenden Drehmoments Md, bei dem die Spuren 18, 19 der beiden Geber G1, G2 in Ellipsenform gemäß Figur 3 realisiert sind, wobei wieder vorzugsweise jedem Geber G1, G2 zwei Weg-Sensoren S1sin, S1cos, S2sin, S2cos zugeordnet sind.

In Figur 10 sind die Spuren der Geber G1, G2 gleichlaufend um die Welle 10 angeordnet, während bei dem Ausführungsbeispiel gemäß Figur 11 die Spuren der Geber G1, G2 gegenläufig beziehungsweise spiegelverkehrt um die Welle 10 angeordnet sind, womit wieder gegebenenfalls auf die Anordnung einwirkende Gleichtaktstörungen kompensiert beziehungsweise unterdrückt werden können.

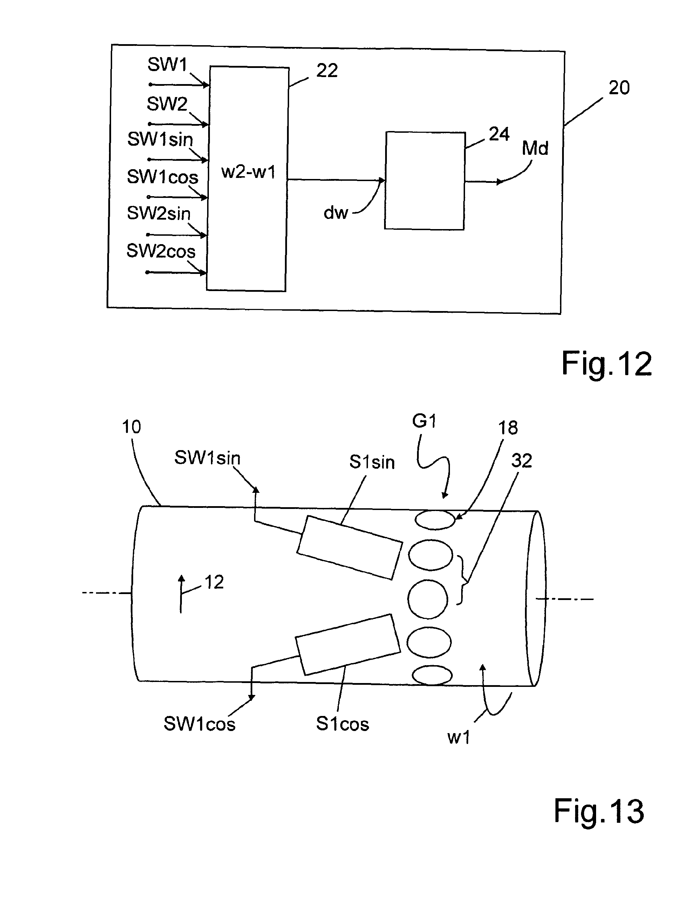

Figur 12 zeigt ein Blockschaltbild einer anderen signalverarbeitenden Anordnung 20, die eine Winkel-Differenzermittlung 22 und eine Drehmoment-Ermittlung 24 enthält. Der Winkel-Differenzermittlung 22 werden die Sensorsignale SW1, SW2, SW1sin, SW1cos, SW2sin, SW2cos der jeweils vorhandenen Weg-Sensoren S1, S2, S1sin, S1cos, S2sin, S2cos zur Verfügung gestellt. Anhand des bereits beschriebenen funktionalen Zusammenhangs zwischen den Sensorsignalen SW1, SW2, SW1sin, SW1cos, SW2sin, SW2cos und den Drehwinkeln w1, w2 ermittelt die Winkel-Differenzermittlung 22 den Verdrehwinkel dw der Welle 10 bezogen auf die Strecke L, welcher der Drehmoment-Ermittlung 24 zur Verfügung gestellt wird. Anhand des ebenfalls beschriebenen funktionalen Zusammenhangs zwischen dem Verdrehwinkel dw und dem Drehmoment Md, ist die Drehmoment-Ermittlung 24 in der Lage, als Ausgangssignal das Drehmoment Md bereitzustellen.

Figur 13 zeigt ein Ausführungsbeispiel, bei dem der Welle 10 wieder der erste Geber G1 zugeordnet ist, der die Spur 18 aufweist. Die Spur 18 verläuft in Umfangsrichtung 12 der Welle 10, wobei in diesem Ausführungsbeispiel eine Steigung h von null, also keine Steigung h vorgegeben sein soll. Die Spur 18 enthält eine Periode 32, die sich vorzugsweise mehrmals identisch in Umfangsrichtung 12 wiederholt. Die Spur 18 wird wieder vom ersten Sensor S1sin abgetastet, der im folgenden als Abstands-Sensor S1 sin bezeichnet wird, der das Sensorsignal SW1 sin bereitstellt, das eindeutig den Drehwinkel w1 der Welle 10 in Bezug auf eine halbe Periode 32 widerspiegelt.

Der erste Abstands-Sensor S1sin ist wieder als ein induktiver Sensor ausgebildet. Das Sensorsignal SW1sin weist beispielsweise eine in Figur 4 gezeigte, von der Position einer Periode 32 abhängige Ausgangsspannung auf, die dem Sinus des Drehwinkels w1 innerhalb einer der gegebenenfalls mehreren Perioden 32 der Spur 18 entspricht.

Zur Erhöhung der Robustheit der Anordnung, insbesondere im Hinblick auf Störeinflüsse, welche auf das Sensorsignal SW1sin einwirken könnten, ist vorzugsweise wieder der zweite Sensor S1cos vorgesehen, der im Folgenden als zweiter Abstands-Sensor S1cos bezeichnet wird, der dieselbe Periode 32 der Spur 18 wie der erste Abstands-Sensor S1sin abtastet, der jedoch wieder derart angeordnet ist, dass sein zweites Sensorsignal SW1cos um wenigstens näherungsweise 90° phasenversetzt zum ersten Sensorsignal SW1 sin ist.

Die Periode 32 der Spur 18 ist vorzugsweise derart ausgebildet, dass sich beim Drehen der Welle 10 wenigstens näherungsweise sinusförmige Sensorsignale SW1sin, SW1cos ergeben, wobei eine Phasenverschiebung um wenigstens näherungsweise 90° vorgegeben sein soll. In der signalverarbeitenden Anordnung 20 wird auch hier die Arcustangens-Funktion der beiden Sensorsignale SW1sin, SW1cos gebildet, die unmittelbar den Drehwinkel w1 der Welle 10 innerhalb einer Periode 32 der Spur 18 liefert. Aufgrund der Division der beiden Sensorsignale SW1sin, SW1cos bei der Ermittlung der Arcustangens-Funktion ist das Ergebnis - wie bereits sinngemäß bei dem Ausführungsbeispiel gemäß den Figuren 5 und 6 - unabhängig von Einflüssen, welche auf die Amplituden der Sensorsignale SW1sin,

SW1cos im Gleichtakt einwirken.

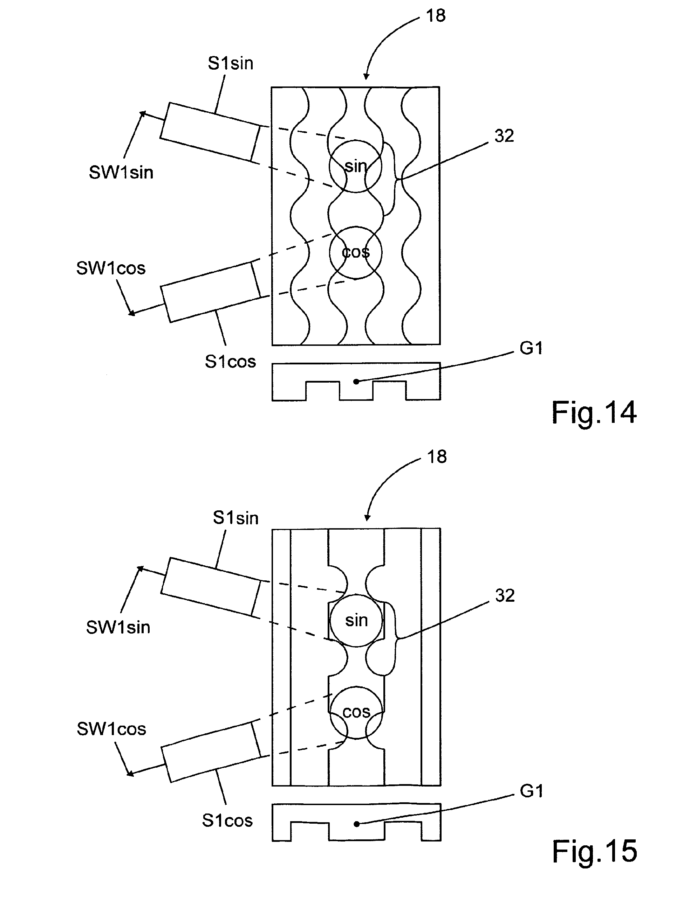

Figur 14 zeigt ein Ausführungsbeispiel der Periode 32 der Spur 18. Der Geber G1 ist beispielsweise als Steg ausgebildet, der gegebenenfalls als Band realisiert ist, das damit nachträglich um die Welle 10 gelegt werden kann. Die Periode 32 ist als Steg mit sinusförmig modulierter Breite realisiert. Die Erstreckung einer Periode 32 in Umfangsrichtung 12 der Welle 10 ist mit der geschweiften Klammer angedeutet. Die Periode 32 wird beispielsweise mittels zweier sinusförmig gefräster Nuten hergestellt.

Figur 15 zeigt ein weiteres Ausführungsbeispiel der Periode 32. Die Periode 32 ist hier beispielsweise wieder als Steg, jedoch mit nur näherungsweise sinusförmig modulierter Breite realisiert. Die Erstreckung einer Periode 32 in Umfangsrichtung 12 der Welle 10 ist wieder mit der geschweiften Klammer angedeutet. Die Periode 32 wird beispielsweise mittels zweier gerader gefrästen Nuten mit seitlichen Ausbuchtungen hergestellt.

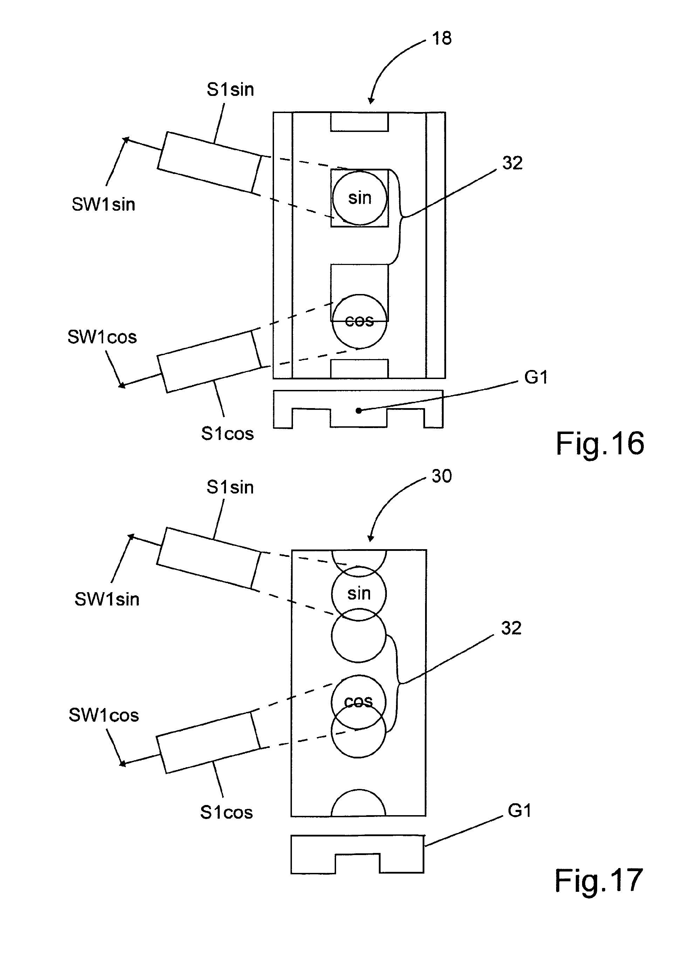

Figur 16 zeigt ein anderes Ausführungsbeispiel der Periode 32. Die Periode 32 ist hier beispielsweise wieder als Steg mit rechteckigen Nocken realisiert. Die Erstreckung einer Periode 32 in Umfangsrichtung 12 der Welle 10 ist wieder mit der geschweiften Klammer angedeutet. Die Periode 32 wird beispielsweise mittels zweier gerader gefrästen Nuten mit Verbindungsnuten hergestellt.

Figur 17 zeigt ein alternatives Ausführungsbeispiel der Periode 32. Die Periode 32 ist hier beispielsweise mit Bohrungen beziehungsweise Ausnehmungen realisiert. Die Erstreckung einer Periode 32 in Umfangsrichtung 12 der Welle 10 ist wieder mit der geschweiften Klammer angedeutet. Die Periode 32 wird beispielsweise mit einer Reihe von Sacklöchern hergestellt.

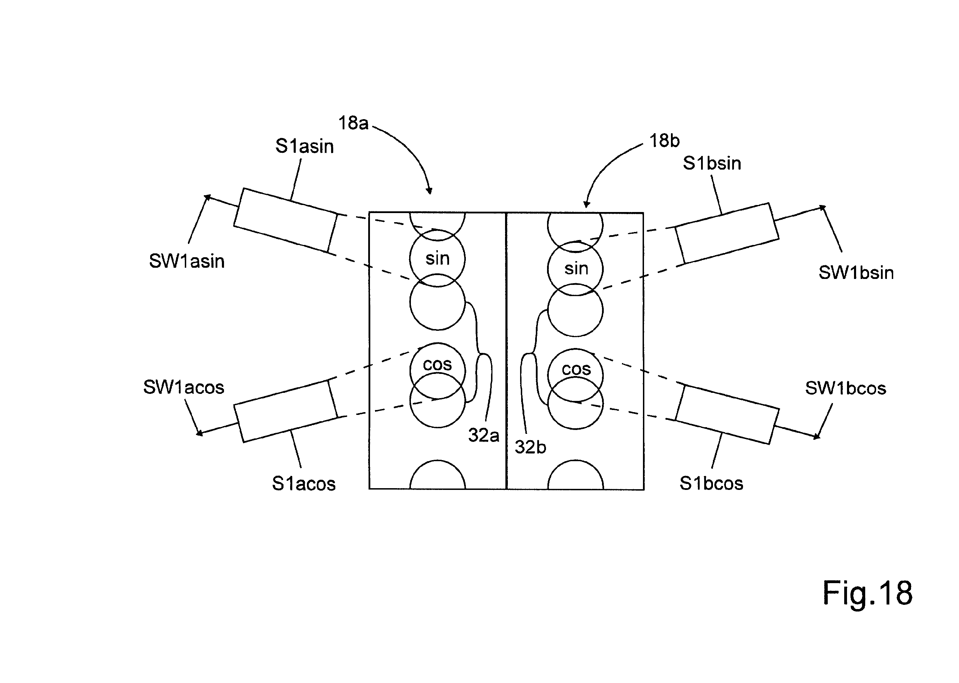

Der Geber G1 gemäß Figur 13 ermöglicht, wie bereits erwähnt, eine eindeutige Erfassung des Drehwinkels w1 der Welle 10 nur innerhalb einer einzigen Periode 32 der Spur 18. Figur 18 zeigt ein Ausführungsbeispiel, bei dem der Geber G1 unmittelbar benachbart zu einer ersten Spur 18a eine zweite Spur 18b aufweist. Die erste Spur 18a wird von einem ersten Spursensor S1asin und einem zweiten Spursensor S1acos abgetastet. Die beiden Spursensoren S1asin, S1acos sind wieder vorzugsweise derart angeordnet, dass bei einer Abtastung der Periode 32a der ersten Spur 18a deren Sensorsignale SW1 asin, SW1 acos eine Phasenverschiebung von wenigstens näherungsweise 90° aufweisen.

Die zweite Spur 18b wird ebenfalls von einem ersten Spursensor S1 bsin und einem zweiten Spursensor S1bcos abgetastet. Die beiden Spursensoren S1bsin, S1bcos sind wieder vorzugsweise derart angeordnet, dass bei einer Abtastung der Periode 32b der zweiten Spur 18b deren Sensorsignale SW1 bsin, SW1 bcos eine Phasenverschiebung von wenigstens näherungsweise 90° aufweisen.

Wesentlich hierbei ist, dass die erste Spur 18a eine Anzahl N größer eins von Perioden 32a aufweist und dass die zweite Spur 18b ebenfalls eine vorgegebene Anzahl M von Perioden 32b aufweist, wobei diese Anzahl M jedoch um ein Vielfaches von eins, vorzugsweise um eins, von der Anzahl N der ersten Spur 18a abweicht. Dadurch liefern die beiden Spuren 18a, 18b zwei unterschiedliche Drehwinkel. Das bedeutet, dass die bei jeder der einzelnen Perioden 32a, 32b ermittelten Drehwinkel eine bestimmte Winkeldifferenz aufweisen, die für jede Drehposition der Welle 10 beziehungsweise für jedes Musterpaar charakteristisch ist. Aus der Winkeldifferenz kann auf ein Abtasten einer ganz bestimmten Periode 32a, 32b geschlossen werden, sodass die Vieldeutigkeit beim Verdrehen der Welle 10 um mehrere Perioden 32a, 32b beseitigt werden kann und eine hoch aufgelöste Erfassung des Drehwinkels w1 der Welle 10 über einen Teil oder den gesamten Umfang möglich wird. Als Referenz für die Ermittlung des Drehwinkels w1 der Welle wird beispielsweise die erste Spur 18a herangezogen, die normalerweise diejenige Spur ist, welche die um mindestens eins höhere Anzahl N von sich wiederholenden Perioden 32a aufweist.

Gemäß einer einfacheren Ausgestaltung des Gebers G1 kann auch nur eine einzige Periode 32 vorgesehen sein. Die Erstreckung der Periode 32 in Umfangsrichtung 12 der Welle 10 ist derart zu bemessen, dass der gewünschte Messbereich für den Drehwinkel w1 erzielt wird. Diese Ausgestaltung gilt für sämtliche Ausführungsbeispiele mit dem in Umfangsrichtung 12 der Welle 10 ohne Steigung h angeordneten Gebern.

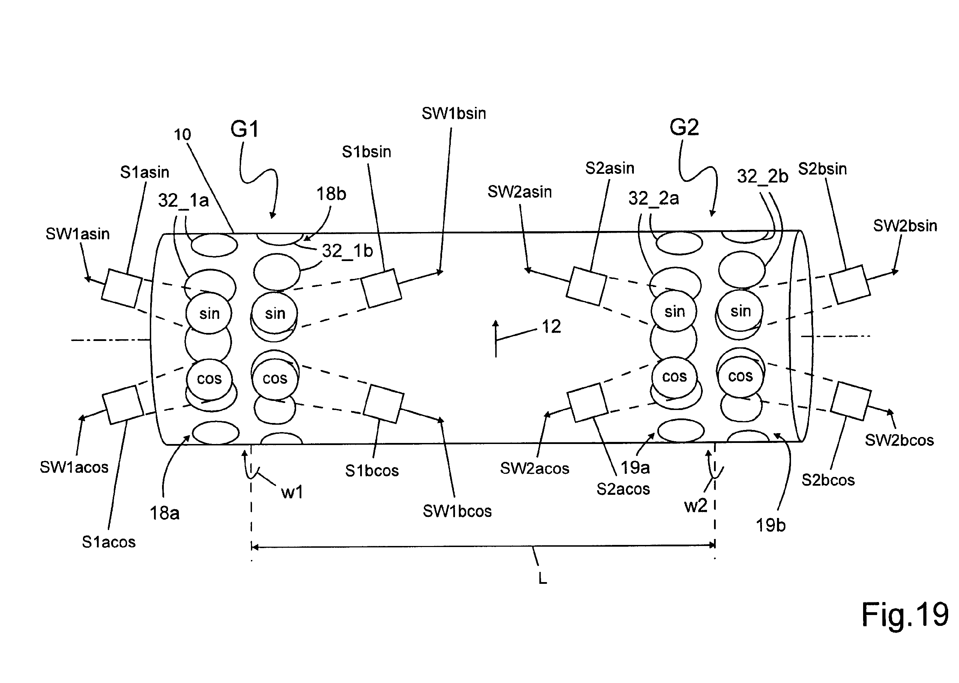

Durch den Einsatz des ersten Gebers G1 und eines zweiten Gebers G2 gemäß den in den Figuren 13 - 18 gezeigten Ausführungsbeispielen, die mit dem vorgegebenen Abstand L der Welle 10 zugeordnet sind, kann wieder das an der Welle 10 auftretende Drehmoment Md anhand der Differenzbildung der Drehwinkel w1, w2 in der bereits beschriebenen Weise ermittelt werden. Die Anordnung ist in Figur 19 gezeigt.

Der erste Geber G1 enthält eine erste Spur 18a sowie eine zweite Spur 18b. Die erste Spur 18a weist eine erste, in Umfangsrichtung 12 der Welle 10 sich erstreckende Periode 32_1 a und die zweite Spur 18b eine zweite, in Umfangsrichtung 12 der Welle 10 gegebenenfalls sich wiederholende Periode 32_1b auf. Die erste Spur 18a wird vom ersten Spursensor S1asin, der ein erstes Sensorsignal SW1asin bereitstellt, sowie vom zweiten Spursensor S1acos, der ein zweites Sensorsignal SW1acos bereitstellt, und die zweite Spur 18b von einem ersten Spursensor S1 bsin, der ein erstes Sensorsignal SW1 bsin bereitstellt, sowie von einem zweiten Spursensor S1 bcos abgetastet, der ein zweites Sensorsignal SW1bcos bereitstellt.

Der zweite Geber G2 enthält eine erste Spur 19a sowie eine zweite Spur 19b. Die erste Spur 19a weist eine erste, in Umfangsrichtung 12 der Welle 10 gegebenenfalls sich mehrmals wiederholende Periode 32 2a und die zweite Spur 19b eine zweite, in Umfangsrichtung 12 der Welle 10 gegebenenfalls sich wiederholende zweite Periode 32_2b auf. Die erste Spur 19a wird von einem ersten Spursensor S2asin, der ein erstes Sensorsignal SW2asin bereitstellt, sowie von einem zweiten Spursensor S2acos, der ein zweites Sensorsignal SW2acos bereitstellt, und die zweite Spur 19b von einem ersten Spursensor S2bsin, der ein erstes Sensorsignal SW2bsin bereitstellt, sowie von einem zweiten Spursensor S2bcos abgetastet, der ein zweites Sensorsignal SW2bcos bereitstellt.

Figur 19 verdeutlicht den Begriff, dass die erste Spur 18a, 19a und die zweite Spur 18b, 19b jeden Gebers G1, G2 unmittelbar benachbart angeordnet sein sollen. Damit soll zum Ausdruck gebracht werden, dass ein gegebenenfalls auftretender Verdrehwinkel zwischen beiden Spuren 18a, 18b; 19a, 19b erheblich geringer ist als der zwischen den beiden, im Abstand L angeordneten Gebern G1, G2 gegebenenfalls auftretende Verdrehwinkel dw, welcher der Ermittlung des an der Welle 10 auftretenden Drehmoments Md zugrunde liegt.

Auch hier ist es in Abhängigkeit vom erwarteten Drehmoment Md beziehungsweise den erwarteten Drehwinkeln w1, w2 möglich, den ersten Geber G1 und/oder den zweiten Geber G2 mit nur einer einzigen Periode 32_1a, 32_2a ohne Wiederholung zu versehen, sodass aufgrund des Wegfalls der Vieldeutigkeit bei den Gebern G1, G2 die zweite Spur 18b, 19b jeweils entfallen kann.

**Patentansprüche**

1. Vorrichtung zur Erfassung eines Verdrehwinkels (dw) einer Welle (10) und/oder eines an der Welle (10) auftretenden Drehmoments (Md),

   **dadurch gekennzeichnet, dass** der Welle (10) wenigstens ein erster Geber (G1) zugeordnet ist, welcher wenigstens einen Spulenparameter beeinflusst, dass zur Abtastung des ersten Gebers (G1) wenigstens ein erster induktiver Sensor (S1, S1sin, S1cos, S1asin, S1acos, S1bsin, S1bcos) vorgesehen ist, dass der wenigstens eine erste Geber (G1) zumindest einem Teil des Umfangs der Welle (10) zugeordnet ist,
   dass der wenigstens eine erste Geber (G1) zumindest eine Spur (18, 18a, 18b) mit wenigstens einer Periode (32, 32a, 32b, 32_1 a, 32_1 b) pro Umdrehung der Welle (10) aufweist und
   dass der wenigstens eine erste induktive Sensor (S1, S1sin, S1cos, S1asin, S1acos, S1bsin, S1bcos) ein Sensorsignal (SW1, SW1sin, SW1cos, SW1asin, SW1 acos, SW1 bsin, SW1 bcos) bereitstellt, das zumindest ein Maß für den Drehwinkel (w1) der Welle (10) innerhalb der Periode (32, 32a, 32b, 32_1 a, 32_1 b) widerspiegelt,
   dass in einem vorgegebenen Abstand (L) zum ersten Geber (G1) ein ebenfalls zumindest einem Teil des Umfangs der Welle (10) zugeordneter zweiter Geber (G2) vorgesehen ist, welcher ebenfalls wenigstens einen Spulenparameter beeinflusst,
   dass zur Abtastung des wenigstens einen zweiten Gebers (G2) wenigstens ein induktiver Sensor (S2, S2sin, S2cos, S2asin, S2acos, S2bsin, S2bcos) vorgesehen ist,
   dass der wenigstens eine zweite Geber (G2) ebenfalls zumindest eine Spur (19, 19a, 19b) mit wenigstens einer Periode (32_2a, 32_2b) pro Umdrehung der Welle (10) aufweist,
   dass der zweite induktive Sensor (S2, S2sin, S2cos, S2asin, S2acos, S2bsin, S2bcos) ebenfalls ein Sensorsignal (SW2, SW2sin, SW2cos, SW2asin, SW2acos, SW2bsin, SW2bcos) bereitstellt, das zumindest ein Maß für den Drehwinkel (w2) der Welle (10) innerhalb der Periode (32_2a, 32_2b) widerspiegelt, und
   dass eine Differenzermittlung (22) vorgesehen ist, welche den Verdrehwinkel (dw) der Welle (10) als Winkeldifferenz der von den induktiven Sensoren (S1, S1sin, S1cos, S1asin, S1acos, S1bsin, S1bcos, S2sin, S2cos, S2asin, S2acos, S2bsin, S2bcos) erfassten zwei Drehwinkeln (w1, w2) ermittelt und bereitstellt.

2. Vorrichtung nach Anspruch 1, **dadurch gekennzeichnet, dass** die wenigstens eine Spur (18, 19) des ersten und/oder zweiten Gebers (G1, G2) nur eine einzige Periode enthält, dass sich die Spur (18, 19) mit einer vorgegebenen Steigung (h) in Längsrichtung (14) der Welle (10) in Spiralenform zumindest teilweise um die Welle (10) windet, sodass stets ein eindeutiger Zusammenhang zwischen dem Drehwinkel (w1, w2) der Welle (10) und dem Sensorsignal (SW1, SW1sin, SW1 cos, SW2, SW2sin, SW2cos) gegeben ist.

3. Vorrichtung nach Anspruch 2, **dadurch gekennzeichnet, dass** die Steigung (h) der Spirale in Längsrichtung (14) der Welle (10) wenigstens näherungsweise konstant ist, sodass wenigstens näherungsweise ein linearer Zusammenhang zwischen dem Drehwinkel (w1, w2) der Welle (10) und dem Sensorsignal (SW1, SW1sin, SW1cos, SW2, SW2sin, SW2cos) gegeben ist.

4. Vorrichtung nach Anspruch 3, **dadurch gekennzeichnet, dass** die Steigung (h) derart festgelegt ist, dass sich die wenigstens eine Spur (18, 19) zumindest einmal vollständig um die Welle (10) herum erstreckt.

5. Vorrichtung nach Anspruch 1, **dadurch gekennzeichnet, dass** die wenigstens eine Spur (18, 19) des ersten und/oder zweiten Gebers (G1, G2) nur eine Periode enthält, dass sich die Spur (18, 19) mit einer vorgegebenen Steigung (h) in Längsrichtung (14) der Welle (10) in Ellipsenform zumindest teilweise um die Welle (10) windet, sodass nur ein abschnittsweise eindeutiger Zusammenhang zwischen dem Drehwinkel (w1, w2) der Welle (10) und dem Sensorsignal (SW1, SW1sin, SW1cos, SW2, SW2sin, SW2cos) gegeben ist.

6. Vorrichtung nach Anspruch 5, **dadurch gekennzeichnet, dass** die wenigstens eine Spur (18, 19) die Welle (10) vollständig umschließt, sodass eine geschlossene Ellipsenform vorliegt.

7. Vorrichtung nach einem der Ansprüche 2 bis 6, **dadurch gekennzeichnet, dass** die Spur (18, 19) als Nut in der Welle (10) realisiert ist.

8. Vorrichtung nach einem der Ansprüche 2 bis 6, **dadurch gekennzeichnet, dass** die Spur (18, 19) als Steg auf der Welle (10) realisiert ist.

9. Vorrichtung nach Anspruch 8, **dadurch gekennzeichnet, dass** der Steg als separates Teil zum nachträglichen Aufbringen auf die Welle (10) realisiert ist.

**10.** Vorrichtung nach Anspruch 1, **dadurch gekennzeichnet, dass** zumindest einer Spur (18, 18a, 18b, 19, 19a, 19b) zwei Sensoren (S1sin, S1cos, S2sin, S2cos, S1asin, S1acos, S1bsin, S1bcos, S2asin, S2acos, S2bsin, S2bcos) zugeordnet sind.

**11.** Vorrichtung nach Anspruch 10, **dadurch gekennzeichnet, dass** die beiden Sensoren (S1sin, S1cos; S2sin, S2cos; S1asin, S1acos; S1bsin, S1bcos, S2asin, S2acos; S2bsin, S2bcos) eines Gebers (G1, G2) bezogen auf die Umfangsrichtung (12) der Welle (10) um einen Winkel von wenigstens näherungsweise 90° versetzt angeordnet sind.

**12.** Vorrichtung nach Anspruch 1, **dadurch gekennzeichnet, dass** die Spur (18, 18a, 18b) des ersten Gebers (G1) bezogen auf die Längsrichtung (14) der Welle (10) spiegelverkehrt gegenüber der Spur (19, 19a, 19b) des zweiten Gebers (G2) gewunden ist.

**13.** Vorrichtung nach Anspruch 1, dass sich die Spur (18, 18a, 18b; 19, 19a, 19b) des ersten und/oder zweiten Gebers (G1, G2) ohne Steigung (h) nur in Umfangsrichtung (12) der Welle (10) erstreckt.

**14.** Vorrichtung nach Anspruch 13, **dadurch gekennzeichnet, dass** die Periode (32, 32a, 32b, 32_1a, 32_1b, 32_2a, 32_2b) der wenigstens einen Spur (18, 18a, 18b; 19, 19a, 19b) des ersten und/oder zweiten Gebers (G1, G2) als Steg oder Nut modulierter Breite und/oder Höhe realisiert ist.

**15.** Vorrichtung nach Anspruch 13, **dadurch gekennzeichnet, dass** die Periode (32, 32a, 32b, 32_1a, 32_1b, 32_2a, 32_2b) der wenigstens einen Spur (18, 18a, 18b; 19, 19a, 19b) des ersten und/oder zweiten Gebers (G1, G2) als Steg mit sinusförmig modulierter Breite realisiert ist.

**16.** Vorrichtung nach Anspruch 13, **dadurch gekennzeichnet, dass** die Periode (32, 32a, 32b, 32_1 a, 32_1 b, 32_2a, 32_2b) der wenigstens einen Spur (18, 18a, 18b; 19, 19a, 19b) des ersten und/oder zweiten Gebers (G1, G2) als Steg mit zumindest abschnittsweise sinusförmig modulierter Breite realisiert ist.

**17.** Vorrichtung nach Anspruch 13, **dadurch gekennzeichnet, dass** die Periode (32, 32a, 32b, 32_1 a, 32_1 b, 32_2a, 32_2b) der wenigstens einen Spur (18, 18a, 18b; 19, 19a, 19b) des ersten und/oder zweiten Gebers (G1, G2) als Nocken realisiert ist.

**18.** Vorrichtung nach Anspruch 13, **dadurch gekennzeichnet, dass** die Periode (32, 32a, 32b, 32_1a, 32_1b, 32_2a, 32_2b) der wenigstens einen Spur (18, 18a, 18b; 19, 19a, 19b) des ersten und/oder zweiten Gebers (G1, G2) als Ausnehmungen realisiert ist.

**19.** Vorrichtung nach einem der Ansprüche 13-18, **dadurch gekennzeichnet, dass** die wenigstens eine Spur (18, 18a, 18b; 19, 19a, 19b) des ersten und/oder zweiten Gebers (G1, G2) eine Vielzahl von sich wiederholenden Perioden (32, 32a, 32b, 32_1a, 32_1b, 32_2a, 32_2b) enthält.

**20.** Vorrichtung nach Anspruch 19, **dadurch gekennzeichnet, dass** einer Spur (18, 18a, 18b; 19, 19a, 19b) ein erster und ein zweiter induktiver Sensor (S1sin, S1cos, S1asin, S1acos, S1bsin, S1bcos, S2asin, S2acos, S2bsin, S2bcos) zugeordnet sind, die in Bezug auf die Periode (32, 32a, 32b, 32_1 a, 32_1 b, 32_2a, 32_2b) der Spur (18, 18a, 18b; 19, 19a, 19b) derart positioniert sind, dass der eine induktive Sensor (S1sin, S1asin, S1bsin, S2asin, S2bsin) gegenüber dem anderen induktiven Sensor (S1cos, S1acos, S1bcos, S2acos, S2bcos) ein um wenigstens näherungsweise 90° phasenverschobenes Sensorsignal (SW1sin, SW1cos, SW1asin, SW1acos, SW1bsin, SW1bcos, SW2asin, SW2acos, SW2bsin, SW2bcos) bereitstellt.

**21.** Verfahren zum Betreiben der Vorrichtung nach Anspruch 20, **dadurch gekennzeichnet, dass** die von den ersten und den zweiten induktiven Sensoren (S1sin, S1cos, S1asin, S1acos, S1bsin, S1bcos, S2asin, S2acos, S2bsin, S2bcos) bereitgestellten, um wenigstens näherungsweise 90° phasenverschobenen Sensorsignale (SW1sin, SW1 cos, SW1asin, SW1acos, SW1bsin, SW1bcos, SW2asin, SW2acos, SW2bsin, SW2bcos) dividiert werden, wobei sich das Maß für den Drehwinkel der Welle (10) innerhalb einer Periode (32, 32a, 32b, 32_1a, 32_1b, 32_2a, 32_2b) aus der Arcustangens-Funktion ergibt.

**22.** Vorrichtung nach Anspruch 20, **dadurch gekennzeichnet, dass** der erste und/oder zweite Geber (G1, G2) zwei unmittelbar benachbarte Spuren (18a, 18b; 19a, 19b) enthält, dass die erste Spur (18a; 19a) eine vorgegebene Anzahl (N) größer eins von sich wiederholenden Perioden (32a, 32_1a, 32_2a) aufweist, dass die zweite Spur (18b; 19b) ebenfalls eine vorgegebene Anzahl (M) von sich wiederholenden Perioden (32b, 32_1 b, 32_2b) aufweist, deren Anzahl (M) jedoch um mindestens eins von der Anzahl (N) der Perioden (32a, 32_1 a, 32_2a) der ersten Spur (18a; 19a) abweicht.

**23.** Vorrichtung nach Anspruch 22, **dadurch gekennzeichnet, dass** jeder der unmittelbar benachbart angeordneten Spuren (18a, 18b; 19a, 19b) ein erster und ein zweiter induktiver Sensor (S1asin, S1acos, S1bsin, S1bcos, S2asin, S2acos, S2bsin, S2bcos) zugeordnet sind, die jeweils in Bezug auf die Periode (32a, 32b, 32_1 a, 32_1 b, 32_2a, 32_2b) ihrer Spur (18a, 18b; 19a, 19b) derart positioniert sind, dass der eine induktive Sensor (S1asin, S1bsin, S2asin, S2bsin) gegenüber dem anderen induktiven Sensor (S1acos, S1bcos, S2acos, S2bcos) ein um wenigstens näherungsweise 90° phasenverschobenes Sensorsignal (SW1asin, SW1acos, SW1bsin, SW1bcos, SW2asin, SW2acos, SW2bsin, SW2bcos) bereitstellt.

**24.** Verfahren zum Betreiben der Vorrichtung nach Anspruch 23, **dadurch gekennzeichnet, dass** zunächst aus den Sensorsignalen (SW1asin, SW1acos, SW2asin, SW2acos) der beiden der ersten Spur (18a, 19a) des Gebers (G1, G2) zugeordneten induktiven Sensoren (S1asin, S1acos, S2asin, S2acos) der Drehwinkel innerhalb einer einzigen Periode (32a, 32_1a, 32_2a) ermittelt wird, dass aus den Sensorsignalen (SW1 bsin, SW1 bcos, SW2bsin, SW2bcos) der beiden der unmittelbar benachbarten zweiten Spur (18b, 19b) zugeordneten Sensoren (S1bsin, S1bcos, S2bsin, S2bcos) der Drehwinkel innerhalb einer einzigen Periode (32b, 32_1b, 32_2b) der zweiten Spur (18b, 19b) ermittelt wird und dass aus der sich ergebenden Winkeldifferenz eindeutig die eine relevante Periode (32a, 32b, 32_1a, 32_1b, 32_2a, 32_2b) aus der Mehrzahl der sich wiederholenden Perioden (32a, 32b, 32_1a, 32_1b, 32_2a, 32_2b) einer vorgegebenen Spur (18a, 18b, 19a, 19b) identifiziert wird.

**25.** Verfahren zum Betreiben der Vorrichtung nach Anspruch 1, **dadurch gekennzeichnet, dass** der Verdrehwinkel (dw) als ein Maß für das an der Welle (10) auftretende Drehmoment (Md) gewertet wird.

**26.** Verwendung der Vorrichtung nach einem der Ansprüche 1 - 23 bei Wellen (10) von Getrieben.

**27.** Computerprogramm zum Betreiben der Vorrichtung zum Erfassen eines Verdrehwinkels (dw) einer Welle (10), wobei das Computerprogramm alle Schritte des Verfahrens gemäß einem der Ansprüche 20, 23 oder 24 zur Ermittlung des Drehwinkels (w1, w2) der Welle (10) und/oder des an der Welle (10) auftretenden Drehmoments (Md) ausführt, wenn das Computerprogramm in einem Computer einer signalverarbeitenden Anordnung (16, 20) abläuft.

Fig.1

Fig.2

Fig.3

Fig.4

Fig.5

Fig.6

Fig.7

Fig.8

Fig.9

Fig.10

Fig.11

Fig.12

Fig.13

Fig.14

Fig.15

...

Fig.16

Fig.17

SW1bsin

S1bsin

18b

SW1bcos

S1bcos

sin

cos

32b

32a

sin

cos

18a

S1asin

SW1asin

S1acos

SW1acos

Fig.18

Fig.19

EP 2 420 803 A1

Europäisches
Patentamt

European
Patent Office

Office européen
des brevets

## EUROPÄISCHER TEILRECHERCHENBERICHT

nach Regel 62a und/oder 63 des Europäischen Patentübereinkommens. Dieser Bericht gilt für das weitere
Verfahren als europäischer Recherchenbericht.

**Nummer der Anmeldung**

EP 10 00 8468

### EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (IPC) |
|---|---|---|---|
| X | EP 0 341 412 A1 (SIEMENS AG [DE]) 15. November 1989 (1989-11-15) * Anspruch 1; Abbildungen 3,4,5 * ----- | 1-26 | INV. G01D5/20 |
| X | EP 0 446 969 A2 (S G KK [JP]) 18. September 1991 (1991-09-18) * Anspruch 1; Abbildungen 24,25,26,42,43 * ----- | 1-26 | |
| A | DE 197 38 836 A1 (HELLA KG HUECK & CO [DE]) 11. März 1999 (1999-03-11) * Anspruch 1; Abbildungen 3,4 * ----- | 1-26 | |

**RECHERCHIERTE SACHGEBIETE (IPC)**

G01D

### UNVOLLSTÄNDIGE RECHERCHE

Die Recherchenabteilung ist der Auffassung, daß ein oder mehrere Ansprüche, den Vorschriften des EPÜ nicht entspricht bzw. entsprechen, so daß nur eine Teilrecherche (R.62a, 63) durchgeführt wurde.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| München | 13. Juli 2011 | Köck, Arno |

EPO FORM 1503 03.82 (P04E09)

**Europäisches Patentamt**

**European Patent Office**

**Office européen des brevets**

**UNVOLLSTÄNDIGE RECHERCHE**
**ERGÄNZUNGSBLATT C**

**Nummer der Anmeldung**

EP 10 00 8468

Vollständig recherchierbare Ansprüche:
      1-26

Nicht recherchierte Ansprüche:
      27

Grund für die Beschränkung der Recherche (nicht patentfähige Erfindung(en)):

Anspruch 27 bezieht sich auf ein Computerprogramm, welches von der Patentierbarkeit ausgeschlossen ist (Regel 67.1(vi)).

      -----

Weitere Beschränkung der Recherche

Vollständig recherchierbare Ansprüche:
      1-26

Nicht recherchierte Ansprüche:
      27

Grund für die Beschränkung der Recherche:

Anspruch 27 bezieht sich auf ein Programm, welches von der Patentierbarkeit ausgeschlossen ist (Art. 52(2)(c)).

# EP 2 420 803 A1

## ANHANG ZUM EUROPÄISCHEN RECHERCHENBERICHT
## ÜBER DIE EUROPÄISCHE PATENTANMELDUNG NR.

EP 10 00 8468

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-07-2011

| Im Recherchenbericht angeführtes Patentdokument | | Datum der Veröffentlichung | Mitglied(er) der Patentfamilie | | Datum der Veröffentlichung |
|---|---|---|---|---|---|
| EP 0341412 | A1 | 15-11-1989 | DE | 8806215 U1 | 30-06-1988 |
| | | | WO | 8911079 A1 | 16-11-1989 |
| EP 0446969 | A2 | 18-09-1991 | KEINE | | |
| DE 19738836 | A1 | 11-03-1999 | CZ | 9802842 A3 | 17-03-1999 |
| | | | EP | 0909955 A2 | 21-04-1999 |
| | | | US | 6236199 B1 | 22-05-2001 |

EPO FORM P0461

Für nähere Einzelheiten zu diesem Anhang : siehe Amtsblatt des Europäischen Patentamts, Nr.12/82

27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19818799 C2
- DE 19932965 A1
- DE 60201226 T2
- DE 69732355 T2
- DE 102007023537 A1
- EP 1315954 B1